# EUROPÄISCHE PATENTANMELDUNG

(11) **EP 3 922 583 A1**
(43) Veröffentlichungstag der Anmeldung: **15.12.2021**
(21) Anmeldenummer: 21178668.6
(22) Anmeldetag: 10.06.2021
(51) Int. Cl.: B65G 1/127

(54) **UMLAUFREGAL UND VERFAHREN ZUM BETRIEB EINES UMLAUFREGALS**

(30) Priorität: 10.06.2020 DE 102020115523
(71) Anmelder: Ebz Systec GmbH, 88212 Ravensburg (DE)
(72) Erfinder: STADLER, Rainer, 88605 Rast (DE)
(74) Vertreter: Otten, Roth, Dobler & Partner mbB Patentanwälte

(57) **Zusammenfassung**

Die Erfindung betrifft ein Umlaufregal (1) zur Bereitstellung von Werkstücken (W1-W4) durch Beladung und Entladung an einer automatisierten Bearbeitungsstation (101), welche ein umlaufendes endloses Transportmittel (2) umfasst, wobei das Transportmittel (2) um wenigstens zwei horizontal im Raum liegenden und parallel zueinander orientierten Achsengeführt (AX1, AX2) ist, welche eine Vielzahl von mit dem Transportmittel (2) verbundenen Führungsmittel (3) umfasst und welche eine Vielzahl von Werkstückträgern (4) umfasst, wobei jeweils ein Werkstückträger (4) jeweils einem Führungsmittel (3) zugeordnet und an diesem gehalten ist. Hierbei umfasst das Umlaufregal (1) Parkpositionen (P1-P5) und die Werkstückträger (4) sind zumindest anteilig derart ausgebildet, dass der jeweilige Werkstückträger (4) von dem diesem zugeordneten Führungsmittel (3) zur Lagerung in eine der Parkpositionen (P1-P5) abkoppelbar ist.

## Beschreibung

Die Erfindung betrifft ein Umlaufregal gemäß dem Oberbegriff des Anspruchs 1 sowie eine Verfahren zum Betrieb eines Umlaufregals nach Anspruch 12.

Aus der Praxis sind als Umlaufregale Kettenbänder insbesondere Paternosterbänder zum Transport von Werkstücken für Fertigungsanlagen bekannt. Diese werden auch zur Entkopplung von Mensch und Maschine innerhalb eines Fertigungsbereichs eingesetzt.

Es ist Aufgabe der Erfindung, ein Umlaufregal vorzuschlagen, durch welches ein Beladeprozess und ein Entladeprozess stärker voneinander entkoppelt sind und welches hohes Füllvolumen aufweist. Weiterhin ist es Aufgabe der Erfindung ein Verfahren zum Betrieb eines Umlaufregals vorzuschlagen durch welches ein Beladeprozess und ein Entladeprozess stärker voneinander entkoppelt werden.

Diese Aufgabe wird ausgehend von den Merkmalen des Oberbegriffs des Anspruchs 1 bzw. 12 durch die kennzeichnenden Merkmale des Anspruchs 1 bzw. 12 gelöst. In den Unteransprüchen sind vorteilhafte und zweckmäßige Weiterbildungen angegeben.

Das erfindungsgemäße Umlaufregal zur Bereitstellung von Werkstücken durch Beladung und Entladung an einer automatisierten Bearbeitungsstation umfasst
- ein umlaufendes endloses Transportmittel, welches insbesondere durch zwei Ketten oder Bänder gebildet ist, wobei das Transportmittel um wenigstens zwei horizontal im Raum liegenden und parallel zueinander orientierten Achsengeführt ist,
- eine Vielzahl von mit dem Transportmittel verbundenen Führungsmitteln,
- eine Vielzahl von Werkstückträgern, wobei jeweils ein Werkstückträger jeweils einem Führungsmittel zugeordnet und an diesem gehalten ist,
- Parkpositionen, wobei die Werkstückträger zumindest anteilig derart ausgebildet sind, dass der jeweilige Werkstückträger von dem diesem zugeordneten Führungsmittel zur Lagerung in einer der Parkpositionen abkoppelbar ist. Hierdurch ist es möglich, ein Beladen der Werkstückträger mit Werkstücken ein Entladen von Werkstücken aus den Werkstücken von dem umlaufenden Materialfluss zu entkoppeln.

Hierdurch kann das Be- und Entladen flexibler gestaltet werden, so dass ein für das Beladen eingesetzter Werker in geringerem Maße einem Taktzwang unterliegt und auch ein das entladen vornehmender Roboter in seinen Bewegungsabläufen weniger durch einen Takt des Umlaufregals bestimmt ist. Durch diese Abkoppelbarkeit lassen sich die Werkstückträger besonders eng aufeinander folgend an dem Transportmittel anordnen, da in dem Umlaufregal kein Freiraum für ein zum Be- und Entladen erforderliches Handling bereitgestellt werden muss, da dieses räumlich getrennt erfolgen kann.

Es ist auch vorgesehen,
- dass das Umlaufregal eine in einem ersten Bereich des Umlaufregals angeordnete Beladeschnittstelle umfasst und
- dass das Umlaufregal eine in einem zweiten Bereich angeordnete Entladeschnittstelle umfasst, wobei der zweite Bereich von dem ersten Bereich örtlich beanstandet, insbesondere auf einer gegenüberliegenden Seite des Umlaufregals befindlich ist,
- wobei die Beladeschnittstelle wenigstens eine Aufnahme umfasst, welche derart zu den umlaufenden Führungsmitteln positioniert ist, dass der Aufnahme nach jedem Takt des Transportmittels ein Führungsmittel derart gegenüber steht, dass der in diesem Führungsmittel gehaltene Werkstückträger derart in die Aufnahme bewegbar, insbesondere verschiebbar ist, dass der Werkstückträger von dem Führungsmittel entkoppelt und in der Aufnahme zur Bestückung in einer der Parkpositionen gehalten ist.

Hierdurch können ein Werker, welcher sich in dem ersten Bereich aufhält, und ein Roboter, welcher in dem zweiten Bereich aktiv ist, gefahrlos zusammenarbeiten. Durch die Möglichkeit des Ausschleusens und Einschleusens von wenigstens einem Werkstückträger ist der Prozess des Beladens des

Werkstückträgers mit Werkstücken von dem Takt des Umlaufregals vollkommen entkoppelt, wenn der Werkstückträger in die Aufnahme ausgeschleust ist.

Es ist auch vorgesehen,
- dass die Entladeschnittstelle, welche insbesondere einem Roboter zugordnet ist, wenigstens zwei weitere Aufnahmen als Parkpositionen umfasst, wobei diese Aufnahmen jeweils derart zu den umlaufenden Führungsmitteln positioniert sind, dass jede Aufnahme nach jedem Takt des Transportmittels einem anderen Führungsmittel derart gegenüber steht,
- dass der Werkstückträger, welcher in dem der ersten Aufnahme gegenüberliegenden ersten Führungsmittel gehalten ist derart in die Aufnahme bewegbar, insbesondere verschiebbar ist, dass der Werkstückträger von dem Führungsmittel entkoppelt und in der Aufnahme zur Entnahme eines von dem Werkstückträger getragenen Werkstücks gehalten ist,
- dass der Werkstückträger, welcher in dem der zweiten Aufnahme gegenüberliegenden zweiten Führungsmittel gehalten ist, derart in die Aufnahme bewegbar, insbesondere verschiebbar ist, dass der Werkstückträger von dem Führungsmittel entkoppelt und in der Aufnahme zur Entnahme eines von dem Werkstückträger getragenen Werkstücks gehalten ist.

Dadurch dass dem Roboter mehrere Aufnahmen zum Ausschleusen von Werkstückträgern zur Verfügung stehen, kann das Umlaufregal dem Roboter einen von der Bewegung des Umlaufregals vollständig entkoppelten Puffer zur Verfügung stellen, so dass der Roboter auch dann weiterarbeiten kann, wenn das Umlaufregal gerade in Bewegung ist oder das Umlaufregal an der Entladeschnittstelle gerade keine Werkstücke oder nicht benötigte Werkstücke bereitstellt. Mit der Zahl der dem Roboter zur Verfügung stehenden Aufnahmen und mit der Zahl der dem Werker zur Verfügung stehenden Aufnahmen steigt die Flexibilität an mittels welcher der Werker über das Umlaufregal mit dem Roboter verbunden ist.

Weiterhin ist es vorgesehen, dass das Führungsmittel zwei an dem Transportmittel pendelnd aufgehängte Gondeln umfasst, wobei die Gondeln insbesondere miteinander verbunden sind und wobei das Transportmittel insbesondere zwei endlose Ketten umfasst, wobei die erste Kette mit der ersten Gondel verbunden ist und wobei die zweite Kette mit der zweiten Gondel verbunden ist. Hierdurch bleiben die Transportmitte im umlaufenden Betrieb immer waagrechte ausgerichtet.

Es ist auch vorgesehen, dass die Parkstationen Orientierungsmittel umfassen, wobei die Orientierungsmittel derart ausgebildet sind, dass einer der Werkstückträger zwischen dem Führungsmittel und der Aufnahme der Parkstation orientiert geführt ist. Hierdurch können die Werkstückträger jeweils sicher zwischen der Führung und der Aufnahme hin- und her bewegt werden.

Weiterhin ist es vorgesehen, dass das die Werkstückträger als universelle Werkstückträger ausgebildet sind, welche zur Aufnahme unterschiedlicher Werkstücke oder zur Aufnahme mehrerer gleicher oder unterschiedlicher Werkstücke geeignet sind. Hierdurch kann ein Auswechseln von Werkstückträgern vermieden werden, so dass keine ungewünschten Rüstzeiten anfallen.

Es ist auch vorgesehen, dass die Aufnahme der Parkstation zum Einschieben und Ausschieben des Werkstückträgers als Linearführung ausgebildet ist. Eine derartige Parkstation lässt sich aus Standardbauteilen kostengünstig herstellen. Es ist insbesondere vorgesehen, dass die Linearführung durch zwei parallel verlaufende, sich zueinander öffnende U-Profilschienen gebildet ist, so dass zwischen die Aufnahme und der Werkstückträger nach Art einer Schubladenführung zusammenwirken. Hierbei umfasst der Werkstückträger an gegenüberliegenden Seiten dann Stege, welche auf die U-Profilschienen angepasst sind. Die Führungen sind dann selbstverständlich vergleichbar zu den Aufnahmen ausgebildet.

Weiterhin ist es vorgesehen, dass eine oder mehrere oder alle Parkstationen der Beladestation und/oder der Entladestation ein Schub- und/oder Zugmittel umfassen, welches auf den jeweiligen Werkstückträger wirkt, um diesen von der Führung in die Aufnahme oder von der Aufnahme in die Führung zu bewegen. Durch derartige Schub- und/oder Zugmittel kann das Einschleusen und Ausschleusen mit einfachen technischen Mitteln automatisiert werden, so dass für den Werker auch eine Gefahrenquelle eliminiert ist.

Alternativ kann es auch vorgesehen sein, dass die Beladestation und/oder die Entladestation einen Roboter umfasst, welcher auf den jeweiligen Werkstückträger wirkt, um diesen von der Führung in die Aufnahme oder von der Aufnahme in die Führung zu bewegen. Auch hierdurch ist eine Automatisierung geschaffen.

Weiterhin ist es vorgesehen, dass die Werkstückträger beim Transport im Umlaufregal jeweils formschlüssig an der jeweiligen Führung gehalten sind. Hierdurch wird ein Verrutschen der Werkstückträger bzw. der Werkstücke beim Transport wirksam verhindert.

Alternativ ist es vorgesehen, dass die Werkstückträger beim Transport im Umlaufregal jeweils kraftschlüssig insbesondere durch eine Schnappverschluss-ähnliche Kraftschlussvorrichtung in den Führungen gehalten sind. Auch hierdurch wird ein Verrutschen der Werkstückträger bzw. der Werkstücke beim Transport wirksam verhindert.

Das erfindungsgemäße Verfahren zum Betrieb eines Umlaufregals, welches insbesondere entsprechend wenigstens einem Teil der vorstehend beschriebenen Merkmale gestaltet ist, umfasst die nachfolgend genannten Schritte:,
- ein in einer als Parkstation dienenden Aufnahme einer Beladestation gehaltener Werkstückträger wird von einem Werker mit wenigstens einem Werkstück bestückt, wobei der Werkstückträger bei still stehendem oder bei bewegtem Transportmittel des Umlaufregals automatisch oder händisch von der Aufnahme in eine der Aufnahme gegenüber stehende freie Führung des Umlaufregals bewegt, insbesondere geschoben wird,
- in einem nachfolgenden Takt, wenn der Aufnahme eine Führung mit einem leeren Werkstückträger gegenüber steht, wird der Werkstückträger von der Führung in die als Parkposition dienende Aufnahme bewegt, insbesondere geschoben, so dass der für die Beladestation beschriebene Ablauf erneut begonnen werden kann.

Hierdurch ist die Bestückungsarbeit des Werkers von einem Takt des Umlaufregals entkoppelt, so dass dieser arbeitenden kann, ohne den Druck zu haben, dass der Takt eingehalten werden muss.

Es ist weiterhin vorgesehen,
- dass in der Entladestation ein in einer Führung gehaltener Werkstückträger, welcher mit wenigstens einem Werkstück bestück ist, bei still stehendem oder bewegtem Transportmittel des Umlaufregals automatisch - insbesondere von einem Roboter - von der Führung in eine der Führung gegenüber stehende freie Aufnahme bewegt, insbesondere geschoben wird und dass der von der Aufnahme gehaltene Werkstückträger automatisch - insbesondere dem selben oder einem anderen Roboter - entladen wird und dass der entladene Werkstückträger bei still stehendem oder bewegtem Transportmittel in die Führung, aus welcher dieser entnommen wurde, oder in eine andere Führung automatisch - insbesondere von einem Roboter - zurückgeschoben wird.

Durch einen derartigen Ablauf ist das Entkoppeln der Entladestation von dem Takt des Umlaufregals auf einfache Weise automatisiert.

Weiterhin ist es vorgesehen, dass in der Beladestation von einem Projektionssystem ein Abbild und/oder Informationen zu einem in den jeweiligen Werkstückträger einzulegenden Werkstücks insbesondere auf den jeweiligen Werkstückträger projiziert wird bzw. werden und/oder von einem Teileprüfsystem optisch kontrolliert wird, ob das korrekte Werkstück korrekt in den Werkstückträger eingelegt ist. Hierdurch kann eine Fehlbestückung zuverlässig vermieden werden.

Es ist auch vorgesehen, dass das Umlaufregal eine Kontrolleinrichtung und eine Anzeigeeinrichtung umfasst, wobei die Kontrolleinrichtung das Beladen und Entladen vor dem Hintergrund eines Produktionsplans derart kontrolliert, dass aktuell zur Beladung anstehende Werkstücke und zukünftig zur Beladung anstehende Werkstücke angezeigt werden, wobei die Anzeige derart strukturiert ist, dass zur Optimierung von Wegstrecken und Wegzeiten mehrfach benötigte Werkstücke und in Nachbarschaft lagernde Werkstücke auf der Anzeige hervorgehoben werden. Hierdurch wird dem Werker die Arbeit insbesondere dadurch erleichtert, dass diese beim Zusammensuchen der verschiedenen Werkstücke seinen Laufweg optimieren kann.

Schließlich ist es vorgesehen, dass das Umlaufregal zum Einschleusen und Ausschleusen von Werkstückträgern an der Beladestation und/oder an der Entladestation wahlweise im Vorwärtslauf oder im Rückwärtslauf betrieben wird. Hierdurch lassen sich die Laufzeiten des Umlaufregals optimieren.

Im Sinne der Erfindung wird unter einem Takt verstanden, dass das Transportmittel sich vorwärts so weit bewegt, dass eine Führung, welche auf die Parkposition P2 ausgerichtet war nachfolgend auf die Parkposition P1 ausgerichtet ist oder dass das Transportmittel sich rückwärts so weit bewegt, dass eine Führung, welche auf die Parkposition P1 ausgerichtet war nachfolgend auf die Parkposition P2 ausgerichtet ist.

Weitere Einzelheiten der Erfindung werden in der Zeichnung anhand von schematisch dargestellten Ausführungsbeispielen beschrieben.

Hierbei zeigt:
- Figur 1:: schematisch eine geschnittene Seitenansicht eines erfindungsgemäßen Umlaufregals;
- Figur 2:: eine Ansicht von rechts auf einen Ausschnitt des in der Figur 1 gezeigten Umlaufregals und
- Figur 3:: eine schematische Draufsicht auf die Beladestation.

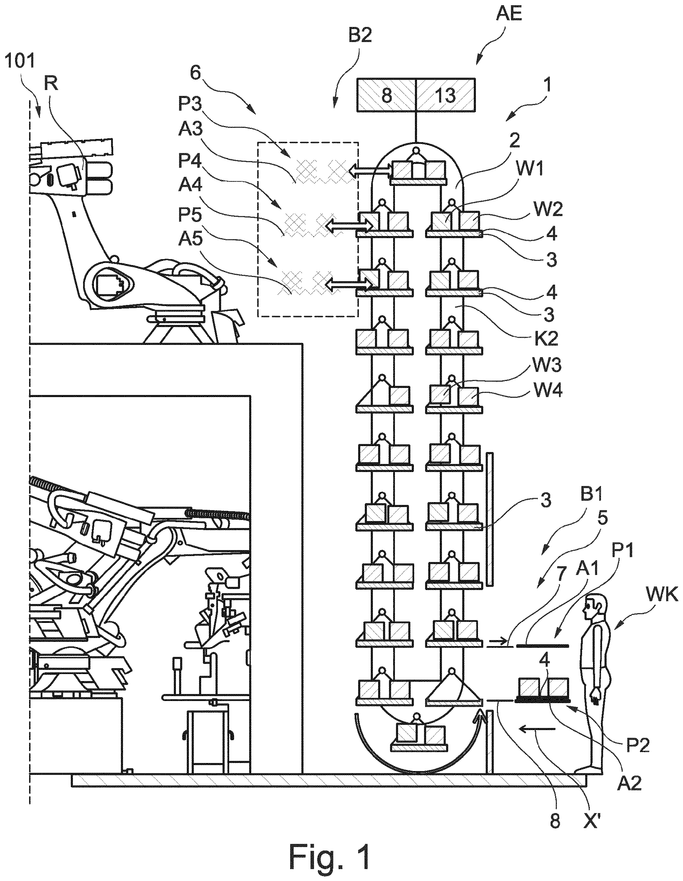

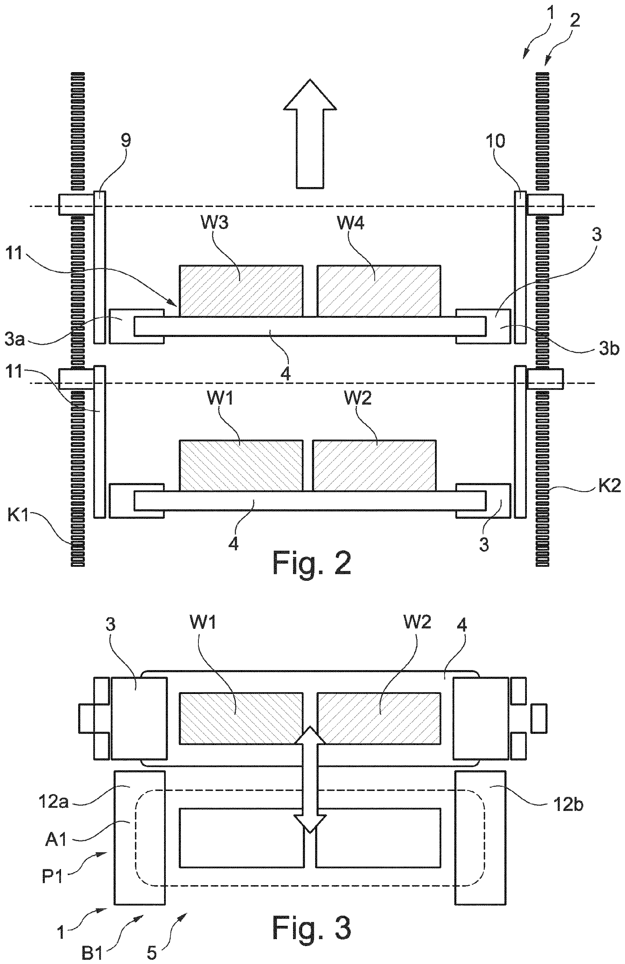

Die Figur 1 zeigt schematisch eine geschnittene Seitenansicht eines erfindungsgemäßen Umlaufregals 1. Das Umlaufregal 1 dient zur Bereitstellung von Werkstücken W1, W2, W3 und W4 unterschiedlichen Typs durch Beladung und Entladung an einer automatisierten Bearbeitungsstation 101. Das Umlaufregal 1 umfasst ein umlaufendes endloses Transportmittel 2, wobei das Transportmittel 2 um wenigstens zwei horizontal im Raum liegenden und parallel zueinander orientierte Achsen AX1, AX2 geführt ist. Das Transportmittel 2 umfasst zwei parallel zueinander umlaufende Ketten, wobei in der Figur 1 bedingt durch die Schnittdarstellung nur die hintere Kette K2 sichtbar ist. Die vordere Kette K1 ist in der Figur 2 sichtbar, welche eine Detailansicht auf das Umlaufregal 1 von rechts in Pfeilrichtung x' zeigt.

Mit dem Transportmittel 2 ist eine Vielzahl von Führungsmitteln 3 verbunden. Die Führungsmittel 3 dienen zur Halterung von Werkstückträgern 4. Hierbei werden die Werkstückträger 4 in der schematischen Darstellung der Figur 1 vereinfacht als auf das jeweilige Führungsmittel 3 aufgeschoben bzw. aufgesetzt dargestellt.

In der bereits erwähnten Figur 2 ist dies detaillierter gezeigt und es ist erkennbar, dass die Führungsmittel 3 jeweils eine linke Schiene 3a und eine rechte Schiene 3b umfassen, in welche der Werkstückträger 4 eingeschoben ist.

Auf dem Werkstückträger 4 sind jeweils zwei der bereits erwähnten Werkstücke W1, W2, W3 bzw. W4 angeordnet. Um den Informationsgehalt der Figur 2 zu erhöhen sind die zwei Werkstücke aus Sicht eines Werkers WK jeweils hintereinander liegend dargestellt. Die Figur 2 zeigt deren tatsächliche Orientierung. In der tatsächlichen Orientierung liegen zwei der Werkstücke W1 bis W4 aus Sicht des Werkers WK jeweils nebeneinander.

Wie bereits erwähnt ist jeweils ein Werkstückträger 4 jeweils einem Führungsmittel 3 zugeordnet und an diesem gehalten.

Das Umlaufregal 1 umfasst mehrere Parkpositionen P1 bis P5 und die Werkstückträger 4 sind alle derart ausgebildet, dass der jeweilige Werkstückträger 4 von dem diesem zugeordneten Führungsmittel 3 zur Lagerung in einer der Parkpositionen P1 bis P5 abkoppelbar ist.

Das Umlaufregal 1 umfasst eine in einem ersten Bereich B1 angeordnete Beladeschnittstelle 5. Diese ist für den Werker WK zugänglich. Weiterhin umfasst das Umlaufregal 1 eine in einem zweiten Bereich B2 angeordnete Entladeschnittstelle 6, wobei der zweite Bereich B2 von dem ersten Bereich B1 örtlich beanstandet ist und sich die Bereiche B1 und B2 diagonal gegenüberliegen.

Die Beladeschnittstelle 5 umfasst die zwei Aufnahme A1, A2, welche derart zu den umlaufenden Führungsmitteln 3 positioniert sind, dass den Aufnahmen A1, A2 nach jedem Takt des Transportmittels 2 ein Führungsmittel 3 derart gegenüber steht, dass der in diesem Führungsmittel 3 gehaltene Werkstückträger 4 derart in die Aufnahme A1 bzw. A2 horizontal verschiebbar ist, dass der Werkstückträger 4 von dem Führungsmittel 3 entkoppelt und in der Aufnahme A1 bzw. A2 zur Bestückung in den Parkpositionen P1 bzw. P2 gehalten ist. In der Figur 1 ist dies so gezeigt, dass das Transportmittel 2 gerade angehalten ist und es vorgesehen ist, dass der der oberen Parkposition P1 zugeordnete Werkstückträger 4 aus der Führung 3, in welcher sich dieser befindet, in die der Führung 3 gegenüberliegende Aufnahme A1 der Parkposition 1 geschoben wird. Dieses Verschieben kann händisch oder mittels einer nicht gezeigten Verschiebemechanik erfolgen. Die Parkposition 2 der Beladeschnittstelle I ist in der Figur 1 gerade mit dem Werkstückträger 4 belegt. Der Werkstückträger 4 wurde vom Werker WK zuvor mit den Werkstücken W3 und W4 bestückt und steht bei dem stehenden Führungsmittel 2 nun bereit in die gegenüberliegende Führung 3 eingeschoben zu werden, so dass die Werkstücke W3 und W4 zu der Entladestation 6 transportiert werden können.

Die Parkstationen P1 und P2 umfasst Orientierungsmittel 7, 8, wobei die Orientierungsmittel 7, 8 derart ausgebildet sind, dass die Werkstückträger 4 jeweils zwischen dem zugeordneten Führungsmittel 3 und der zugeordneten Aufnahme A1 bzw. A2 der Parkstation P1 bzw. P2 orientiert geführt ist. Hierdurch ist insbesondere ein ungewünschtes Pendeln der Führungsmittel 3 vermieden.

Die Entladestation 6 umfasst die drei weiteren Parkstationen P3, P4 und P5. Hier ist schematisch angedeutet, dass die Werkstückträger 4 jeweils zwischen den sich gegenüberliegenden Führungsmitteln 3 und Aufnahmen A3, A4 bzw. A5 bewegt werden können, wenn das Transportmittel 2 angehalten ist. Weiterhin ist angedeutet, dass die Aufnahmen A3, A4 und A5 jeweils zu den Führungsmitteln 3 hin und von den Führungsmitteln 3 weg bewegt werden können. Dies erfolgt automatisiert zur sicheren Übergabe der Werkstückträger 4. Alternativ können auch wie bei der Beladestation 5 Orientierungsmittel verwendet werden. Ebenso können in der Beladestation 5 statt der Orientierungsmittel auch verfahrbare Aufnahmen zum Einsatz kommen.

Alternativ kann es auch vorgesehen sein, dass die Aufnahmen und/oder die Werkstückträger in der Entladestation 6 durch einen Roboter R erfolgen, welcher auch für die Montage der zugeführten Werkstücke vorgesehen ist.

Aus der Figur 2 ist ersichtlich, dass jedes Führungsmittel 3 zwei an dem Transportmittel 2 bzw. K1, K2 pendelnd aufgehängte Gondeln 9, 10 umfasst. Die Gondeln 9, 10 bilden hierbei auch die Schienen 3a und 3b und sind über eine hinter dem Werkstückträger 4 verdeckt verlaufende Strebe 11 verbunden.

Die Werkstückträger 4 sind als universelle Werkstückträger ausgebildet, welche zur Aufnahme jeweils zwei gleicher oder zweier unterschiedlicher Werkstücke geeignet sind.

Die Aufnahmen A1 bis A5 der Parkstationen P1 bis P5 sind wie die Führungen 3 jeweils zum Einschieben und Ausschieben der Werkstückträger 4 als Linearführung 12 ausgebildet, welche zwei Schienen 12a, 12b umfassen. Dies ist schematisch aus der Figur 3 ersichtlich, welche mit einem Doppelfeil andeutet, dass der Werkstückträger 4 aus der Führung 3 in die Aufnahme A1 der Parkposition P1 einschiebbar ist und danach wieder in die Führung zurückgeschoben werden kann. Selbstverständlich kann der Werkstückträger 4 auch in jede andere Führung, welche keinen anderen Werkstückträger 4 trägt, eingeschoben werden, wenn das Transportmittel 2 diese gegenüber der Parkposition P1 positioniert.

Die Werkstückträger 4 sind an den Führungen 3 jeweils kraftschlüssig gehalten, so dass eine die Transportsicherheit gewährleistende Mindestkraft erforderlich ist, um die Werkstückträger 4 in den Parkpositionen P1 bis P5 aus den Führungen 3 und in die Führungen 3 zu bewegen.

Alternativ ist es auch vorgesehen, dass die Führungen Verriegelungsmittel umfassen, mittels welchen die Werkstückträger sich insbesondere automatisch formschlüssig an den Führungen sichern lassen.

In der Figur 1 ist schematisch auch eine Anzeigeeinrichtung AE dargestellt, welche anzeigt, welche Werkstücke als nächste über die Beladestation 5 zugeführt werden sollten.

### Bezugszeichenliste:

- 1: Umlaufregal
- 2: Transportmittel
- 3: Führungsmittel
- 3a: linke Schiene von 3
- 3b: rechte Schiene von 3
- 4: Werkstückträger
- 5: Beladeschnittstelle
- 6: Entladeschnittstelle
- 7, 8: Orientierungsmittel
- 9, 10: Gondel von 3
- 11: Strebe von 3
- 12a, 12b: Schienen von A1

- 101: Bearbeitungsstation

- A1, A2: Aufnahme von 5
- A3-A5: Aufnahme von 6
- AE: Anzeigeeinrichtung
- AX1, AX2: Achse von 1
- B1: ersten Bereich von 1
- B2: zweiten Bereich von 1
- K1, K2: Kette von 2
- P1-P5: Parkposition
- P3-P5: Parkstation
- R: Roboter von 101
- W1-W4: Werkstück
- WK: Werker
- x': Pfeilrichtung

## Patentansprüche

1. Umlaufregal (1) zur Bereitstellung von Werkstücken (W1-W4) durch Beladung und Entladung an einer automatisierten Bearbeitungsstation (101) umfassend
- ein umlaufendes endloses Transportmittel (2), wobei das Transportmittel (2) um wenigstens zwei horizontal im Raum liegenden und parallel zueinander orientierten Achsengeführt (AX1, AX2) ist,
- eine Vielzahl von mit dem Transportmittel (2) verbundenen Führungsmitteln (3),
- eine Vielzahl von Werkstückträgern (4), wobei jeweils ein Werkstückträger (4) jeweils einem Führungsmittel (3) zugeordnet und an diesem gehalten ist,
**dadurch gekennzeichnet,**
- **dass** das Umlaufregal (1) Parkpositionen (P1-P5) umfasst und die Werkstückträger (4) zumindest anteilig derart ausgebildet sind, dass der jeweilige Werkstückträger (4) von dem diesem zugeordneten Führungsmittel (3) zur Lagerung in eine der Parkpositionen (P1-P5) abkoppelbar ist.

2. Umlaufregal nach Anspruch 1, **dadurch gekennzeichnet,**
- **dass** das Umlaufregal (1) eine in einem ersten Bereich (B1) des Umlaufregals (1) angeordnete Beladeschnittstelle (5) umfasst und
- **dass** das Umlaufregal (1) eine in einem zweiten Bereich (B2) angeordnete Entladeschnittstelle (6) umfasst, wobei der zweite Bereich (B2) von dem ersten Bereich (B1) örtlich beanstandet, insbesondere auf einer gegenüberliegenden Seite des Umlaufregals (1) befindlich ist,
- wobei die Beladeschnittstelle (5) wenigstens eine Aufnahme (A1, A2) umfasst, welche derart zu den umlaufenden Führungsmitteln (3) positioniert ist, dass der Aufnahme (A1, A2) nach jedem Takt des Transportmittels (2) ein Führungsmittel (3) derart gegenüber steht, dass der in diesem Führungsmittel (3) gehaltene Werkstückträger (4) derart in die Aufnahme (A1, A2) bewegbar, insbesondere verschiebbar ist, dass der Werkstückträger (4) von dem Führungsmittel (3) entkoppelt und in der Aufnahme (A1, A2) zur Bestückung in einer der Parkpositionen (P1, P2) gehalten ist.

3. Umlaufregal nach wenigstens einem der vorhergehenden Ansprüche, **dadurch gekennzeichnet,**
- **dass** die Entladeschnittstelle (6) wenigstens zwei weitere Aufnahmen (A3-A5) als Parkpositionen (P3-P5) umfasst, wobei diese Aufnahmen (A3-A5) jeweils derart zu den umlaufenden Führungsmitteln (3) positioniert sind, dass jede Aufnahme (A3-A5) nach jedem Takt des Transportmittels (2) einem anderen Führungsmittel (3) derart gegenüber steht,
- **dass** der Werkstückträger (4), welcher in dem der ersten Aufnahme (A3) gegenüberliegenden ersten Führungsmittel (3) gehalten ist derart in die Aufnahme (A3) bewegbar, insbesondere verschiebbar ist, dass der Werkstückträger (4) von dem Führungsmittel (3) entkoppelt und in der Aufnahme (A3) zur Entnahme eines von dem Werkstückträger (4) getragenen Werkstücks (W1-W4) gehalten ist,
- **dass** der Werkstückträger (4), welcher in dem der zweiten Aufnahme (A4) gegenüberliegenden zweiten Führungsmittel (3) gehalten ist, derart in die zweite Aufnahme (A4) bewegbar, insbesondere verschiebbar ist, dass der Werkstückträger (4) von dem Führungsmittel (3) entkoppelt und in der Aufnahme (A4) zur Entnahme eines von dem Werkstückträger (4) getragenen Werkstücks (W1-W4) gehalten ist.

4. Umlaufregal nach wenigstens einem der vorhergehenden Ansprüche, **dadurch gekennzeichnet, dass** das Führungsmittel (3) zwei an dem Transportmittel (2) pendelnd aufgehängte Gondeln (9, 10) umfasst, wobei die Gondeln (9, 10) insbesondere miteinander verbunden sind.

5. Umlaufregal nach wenigstens einem der vorhergehenden Ansprüche, **dadurch gekennzeichnet, dass** die Parkstationen (P1, P2) Orientierungsmittel (7, 8) umfassen, wobei die Orientierungsmittel (7, 8) derart ausgebildet sind, dass einer der Werkstückträger (4) zwischen dem Führungsmittel (3) und der Aufnahme (A1, A2) der Parkstation (P1, P2) orientiert geführt ist.

6. Umlaufregal nach wenigstens einem der vorhergehenden Ansprüche, **dadurch gekennzeichnet, dass** das die Werkstückträger (4) als universelle Werkstückträger (4) ausgebildet sind, welche zur Aufnahme unterschiedlicher Werkstücke (W1-W4) oder zur Aufnahme mehrerer gleicher oder unterschiedlicher Werkstücke (W1-W4) geeignet sind.

7. Umlaufregal nach wenigstens einem der vorhergehenden Ansprüche, **dadurch gekennzeichnet, dass** die Aufnahme (A1-A5) der Parkstation (P1-P5) zum Einschieben und Ausschieben des Werkstückträgers (4) als Linearführung (12) ausgebildet ist.

8. Umlaufregal nach wenigstens einem der vorhergehenden Ansprüche, **dadurch gekennzeichnet, dass** eine oder mehrere oder alle Parkstationen (P1-P5) der Beladestation (5) und/oder der Entladestation (6) ein Schub- und/oder Zugmittel umfassen, welches auf den jeweiligen Werkstückträger (4) wirkt, um diesen von der Führung (3) in die Aufnahme (A1-A5) oder von der Aufnahme (A1-A5) in die Führung (3) zu bewegen.

9. Umlaufregal nach wenigstens einem der Ansprüche 1 bis 7, **dadurch gekennzeichnet, dass** die Beladestation (5) und/oder die Entladestation (6) einen Roboter (R) umfasst, welcher auf den jeweiligen Werkstückträger (4) wirkt, um diesen von der Führung (3) in die Aufnahme (A1-A5) oder von der Aufnahme (A1-A5) in die Führung (5) zu bewegen.

10. Umlaufregal nach wenigstens einem der vorhergehenden Ansprüche, **dadurch gekennzeichnet, dass** die Werkstückträger (4) beim Transport im Umlaufregal (1) jeweils formschlüssig an der jeweiligen Führung (3) gehalten sind.

11. Umlaufregal nach wenigstens einem der vorhergehenden Ansprüche 1 bis 9, **dadurch gekennzeichnet, dass** die Werkstückträger (4) beim Transport im Umlaufregal (1) jeweils kraftschlüssig insbesondere durch eine Schnappverschluss-ähnliche Kraftschlussvorrichtung in den Führungen (3) gehalten sind.

12. Verfahren zum Betrieb eines Umlaufregals (1) insbesondere nach wenigstens einem der vorhergehenden Ansprüche, **dadurch gekennzeichnet,**
- **dass** ein in einer als Parkstation (P1, P2) dienenden Aufnahme (A1, A2) einer Beladestation (5) gehaltener Werkstückträger (4) von einem Werker (WK) mit wenigstens einem Werkstück (W1-W4) bestückt wird, dass der Werkstückträger bei still stehendem oder bei bewegtem Transportmittel (2) des Umlaufregals (1) automatisch oder händisch von der Aufnahme (A1, A2) in eine der Aufnahme (A1, A2) gegenüber stehende freie Führung (F) des Umlaufregals (1) bewegt, insbesondere geschoben wird,
- **dass** in einem nachfolgenden Takt, wenn der Aufnahme (A1, A2) eine Führung (3) mit einem leeren Werkstückträger (4) gegenüber steht, der Werkstückträger (4) von der Führung (3) in die als Parkposition (P1, P2) dienende Aufnahme (A1, A2) bewegt, insbesondere geschoben wird, so dass der für die Beladestation (5) beschriebene Ablauf erneut begonnen werden kann.

13. Verfahren nach Anspruch 12, **dadurch gekennzeichnet,**
- **dass** in der Entladestation (6) ein in einer Führung (3) gehaltener Werkstückträger (4), welcher mit wenigstens einem Werkstück (W1-W4) bestück ist, bei still stehendem oder bewegtem Transportmittel (2) des Umlaufregals (1) automatisch von der Führung (3) in eine der Führung (3) gegenüber stehende freie Aufnahme (A3-A5) bewegt, insbesondere geschoben wird und dass der von der Aufnahme (A3-A5) gehaltene Werkstückträger (4) automatisch entladen wird und dass der entladene Werkstückträger (4) bei still stehendem oder bewegtem Transportmittel (2) in die Führung (3), aus welcher dieser entnommen wurde, oder in eine andere Führung (3) automatisch, insbesondere von einem Roboter (R) zurückgeschoben wird.

14. Verfahren nach Anspruch 12 oder 13, **dadurch gekennzeichnet, dass** in der Beladestation (5) von einem Projektionssystem ein Abbild und/oder Informationen zu einem in den jeweiligen Werkstückträger (4) einzulegenden Werkstücks (W1-W4) insbesondere auf den jeweiligen Werkstückträger (4) projiziert wird und/oder von einem Teileprüfsystem optisch kontrolliert wird, ob das korrekte Werkstück (W1-W4) korrekt in den Werkstückträger (4) eingelegt ist.

15. Verfahren nach wenigstens einem der Ansprüche 12 bis 14, **dadurch gekennzeichnet, dass** das Umlaufregal (1) einer Kontrolleinrichtung und eine Anzeigeeinrichtung (AE) umfasst, wobei die Kontrolleinrichtung das Beladen und Entladen vor dem Hintergrund eines Produktionsplans derart kontrolliert, dass aktuell zur Beladung anstehende Werkstücke (W1-W4) und zukünftig zur Beladung anstehende Werkstücke (W1-W4) angezeigt werden, wobei die Anzeige derart strukturiert ist, dass zur Optimierung von Wegstrecken und Wegzeiten mehrfach benötigte Werkstücke und in Nachbarschaft lagernde Werkstücke auf der Anzeige hervorgehoben werden.

16. Verfahren nach wenigstens einem der Ansprüche 12 bis 15, **dadurch gekennzeichnet, dass** das Umlaufregal zum Einschleusen und Ausschleusen von Werkstückträgern (4) an der Beladestation (5) und/oder an der Entladestation (6) wahlweise im Vorwärtslauf oder im Rückwärtslauf betrieben wird.
